Europäisches Patentamt

European Patent Office

Office européen des brevets

(11) Publication number: **0 455 265 A2**

# EUROPEAN PATENT APPLICATION

(21) Application number: **91109457.1**

(22) Date of filing: **12.09.84**

(51) Int. Cl.⁵: **C08G 67/02, B29C 65/04**

---

This application was filed on 10.06.1991 as a divisional application to the application mentioned under INID code 60.

(30) Priority: **12.09.83 US 531110**

(43) Date of publication of application:
**06.11.91 Bulletin 91/45**

(60) Publication number of the earlier application in accordance with Art.76 EPC: **0 137 332**

(84) Designated Contracting States:
**AT BE CH DE FR GB IT LI NL SE**

(71) Applicant: **THE DOW CHEMICAL COMPANY**
**2030 Dow Center Abbott Road**
**Midland, MI 48640(US)**

(72) Inventor: **Lancaster, Gerald M.**
**303 Tarpon Avenue**
**Freeport, Texas 77541(US)**
Inventor: **Allen, James A.**
**105 Fir Drive**
**Lake Jackson, Texas 77566(US)**

(74) Representative: **Raynor, John et al**
**W.H. Beck, Greener & Co 7 Stone Buildings**
**Lincoln's Inn**
**London WC2A 3SZ(GB)**

---

(54) **Radio-frequency heatable olefinic polymers.**

(57) Olefinic polymers which may be heated by radiofrequency radiation having a frequency of more than 1MHz contain from 0.1 to 50 weight percent of units derived from carbon monoxide.

EP 0 455 265 A2

The use of high-frequency electromagnetic energy as a means of heating polymers is an advancing art which finds application in many fields, especially in fields in which conventional conductive, convective, or radiant heat energy is not suitable, practical, or possible. For instance, sealing of a polymer to itself or to some other substrate can be with appropriate polymer compositions an important commercial technique in producing a desired end-product.

There are some polymers which are not well-suited for high-frequency heating operations. In such ill-suited polymers, high-frequency heating does not occur, or occurs only after inefficiently prolonged time. In production assembly lines, a quick heat-seal operation is generally preferred.

Among polymers ill-suited for high-frequency heating are olefin polymers, e.g., polymers and copolymers of ethylene, propylene, styrene or other $\alpha$-olefinically unsaturated hydrocarbons having 2 to 10 carbon atoms. Some of these olefin polymers may contain polar or polarizable groups, from incorporation of, e.g., acrylic or methacrylic acid or their alkyl esters as comonomers with the olefins. These groups may at high levels impart a modicum of high-frequency heatability to the polymer, but the efficacy is so slight that it is infeasible on a commercial basis. Some polymers having polar groups, e.g. chlorinated PE, ethylene/vinyl acetate copolymer, PVC, polyvinylidene chloride, and polyamide, are heatable with certain frequencies of electromagnetic radiation.

Polyethylene is particularly known in the art to be substantially unsuitable for high-frequency heating unless sensitizers are added to the polymer. This is true whether it is linear or branched, or of low, medium, or high density (see, e.g., U.S. Patent Nos. 3,336,173, 3,640,913, and 3,810,799).

It is an object of the present invention to provide means for imparting improved radio-frequency heatability to olefin polymers and copolymers which ordinarily are found to be ill-suited for such heating operations.

Radio-frequency heatability (e.g., for sealing, bonding, extrusion, molding or melting) is imparted to olefin polymers by polymerizing carbon monoxide into the polymer structure, thus providing novel capabilities for radio-frequency heating of polymers which otherwise are unsuited, or ill-suited, for high-frequency heating operations. Novel radio-frequency heated articles are prepared and novel radio-frequency heating operations are provided as a result of the carbon monoxide inclusion in the polymer. Also novel terpolymers of ethylene/CO/carboxylic acids, such as acrylic acid, and salts thereof, are prepared which, in addition to being heatable by high-frequency electromagnetic energy, are found to have better adhesion to various substrates than copolymers of ethylene/carboxylic acids and salts thereof.

The preparation of olefin polymers, copolymers, and terpolymers is well known are well known to practitioners of the relevent polymer art. For the most part, the olefin copolymers and terpolymers of interest in the present invention are prepared by the high pressure, high temperature, free-radical initiated, polymerization method such as the historically-popular ICI process or as disclosed in U.S. Patent No. 2,497,323. However, polymerization processes which employ certain coordination catalysts or metal catalysts (e.g., the Ziegler-type, Natta-type, or Phillips-type) may be used by selecting a catalyst (such as in U.S. Patent No. 3,083,184) which is not easily poisoned or deactivated by carbon monoxide or other oxygen-containing monomer and is highly reactive with many metal-carbon bonds.

Olefin polymers within the purview of this invention, which are rendered heatable by high frequency electromagnetic radiation by incorporating carbon monoxide groups into the polymer chain, are polymers formed by polymerizing monomers having ethylenic (olefinic) unsaturation. A sole olefin or a plurality of olefins may be used along with the carbon monoxide in preparing the polymers. Preferably the olefin monomer is ethylene, sometimes including a small proportion of a $C_3$-$C_8$ aliphatic olefin for property modification. The olefin monomer can also include an unsaturated organic acid having 3 to 8 carbon atoms, such as acrylic acid, methacrylic acid, and 1-butenoic acid; alkyl esters or metal salts of these acids may also be used, such as ethyl acrylate, methyl methacrylate, 2-ethylhexyl acrylate, sodium acrylate, and potassium methacrylate.

It has been known for many years that olefins, e.g. ethylene, and carbon monoxide, can be copolymerized or terpolymerized. Also, hydrogenated CO containing olefin polymers (which contain C-OH groups along the polymer chain) are included here, such as hydrogenated ethylene/carbon monoxide copolymers prepared by the process of U.S. Patent No. 2,495,292.

The following U.S. patents are representative of the art pertaining to interpolymers of carbon monoxide and monoolefins: 2,495,286; 2,497,323; 3,248,359; 3,780,140; and 4,143,096. The amount of CO groups in the ethylene interpolymers should be in the range of 0.1 to 50 percent by weight, preferably 1 to 40 percent by weight, most preferably 5 to 30 percent by weight.

It is also known that there are additives (sensitizers) which can be blended into a polymer, such as polyethylene to render it heatable by electromagnetic high-frequency energy, such as talc, $ZnCl_2$, carbon black, nylon, and iron oxide. Such additives, however, usually have a pronounced visual, physical, or chemical effect which, in some applications, is undesirable. Furthermore, uniform distribution of the sensitizers is essential to avoid "hot-spots" which can give irregular results and may even damage the polymer.

It is within the purview of the present invention to create high-frequency sensitizer groups along the polymer chain in polymers which otherwise would be ill-suited for high-frequency heating. Even when a polymer of the present invention is blended as a "masterbatch" with other polymer to sensitize the whole, the polymers are sufficiently compatible that little or no visual effects are encountered. Thus, clear films of olefin polymers can be prepared which are readily heat-sealed using high-frequency energy.

As used herein "high-frequency sealability" refers to the bonding of the sealable polymer to a portion of itself or to another material using electromagnetic energy frequencies of 0.1-30,000 MHz. This high-frequency range includes electromagnetic waves over a broad frequency range (0.1 to 30,000 MHz) and covers the ultrasonic frequency range (18 KHz-1000 KHz), the radio frequency (RF) range (1 MHz-300 MHZ ), and the microwave (MW) frequency range (300 MHz-10,000 MHz). The RF and MW ranges are of particular interest with special interest in the MW range due to the increasing use of MW as a processing device.

Uses for this polymer or blend technology includes packaging applications where high speed seals are required, e.g., high-frequency activated adhesive films; extrusion coatings; moldings; hot melts in uses such as aseptic packaging, retort pouches, sandwich bags; lamination of foam, fabric, or film layers; and powder moldings. Furthermore, the method of the present invention provides polymers suitable for use in RF extruders, including continuous extruders or batch extruders, used to apply wire and cable coatings.

In one aspect, this invention relates to an improved method of rendering a polymer such as polyethylene, polypropylene or polystyrene, which is not heatable or sealable utilizing high-frequency (HF) electromagnetic radiation (0.1-30,000 MHz). HF-sealable by either incorporation of carbon monoxide by copolymerization or by blending or grafting a carbon monoxide copolymer or terpolymer into the polymer matrix. Hydrogenated forms of the above can also be used. In addition, ethylene/carbon monoxide copolymer (E/CO) and interpolymers containing CO can be used for microwave sealing applications.

We have unexpectedly found that ECO copolymers and interpolymers convert high-frequency electromagnetic radiation into heat for sealing, welding or fusing over a broad frequency range (0.1-30,000 MHz). Typically, ethylene copolymers may be heatable to some extent at low RF frequencies of 1-50 MHz (radio frequency range is typically considered to be from 1-300 MHz; microwave frequency range is 300-30,000 MHz) such as ethylene/vinyl acetate copolymer (EVA), but none have been found which efficiently heat at the higher frequencies. Other examples of polymers heatable at low frequencies, but which do not efficiently heat at the higher frequencies are polyvinyl chloride (PVC), polyvinylidene chloride, chlorinated polyethylene (CPE), and Nylon 6.

The advantages of sealing polymers with high-frequency electromagnetic waves include faster and more efficient sealing, sealing through poor heat-conductors, e.g., paper or cardboard exteriors, stronger seals or bonds, improved economics based on efficient use of energy input, the ability to seal, bond, or laminate larger surface areas, sealing of thicker or more complex film laminates and specific sealing.

The general heating rate for the interaction of an electromagnetic wave can be used to determine sealing rates utilizing the following equation:

$$G = 13.3 \times 10^{-14} fF^2(E'\tan \delta) \qquad (1)$$

where G is the heating rate in cal/cm$^3$•sec, f is the frequency in Hz of the electromagnetic wave, F$^2$ is the field strength or power in volts/cm, E' is the dielectric constant of the polymer and tan $\delta$ is the dielectric loss tangent (measure of the heating property of the material when exposed to HF electromagnetic waves). Thus, in general (since tan $\delta$ varies with frequency) the higher the frequency the higher the heating rate or the faster the sealing ability of the material. The carbon monoxide (CO) containing interpolymers can be sealed or heated over a broad frequency range which allows one to have the option of using microwave frequencies for optimum speed in heating or sealing. This feature (heating or sealing over such a broad frequency) appears to be unique to these interpolymers or copolymers containing CO.

There are also advantages of CO copolymers or interpolymers over other polymers (e.g., PVC, PVCl$_2$, CPE, EVA), that are sealable using radio frequency sealing methods which include, for example:

1. E/CO is like conventional low density polyethylenes in physical properties and film appearance, i.e., higher melting point, low film blockage, easy processability, can be used for film, extrusion coating and molding resin. Furthermore, the need for plasticizers is obviated.

2. CO can be copolymerized with ethylene and vinyl acetate to produce a CO-modified EVA polymer to render it more sealable and broadens the sealing frequency range. CO can also be copolymerized into an EAA or EMAA polymer allowing an EAA-like or EMAA-like terpolymer to be RF and microwave sealable (EAA and EMAA are not RF or microwave sealable). This includes the metal salts or "ionomer-type" embodiments of these polymers.

3. CO containing copolymers or interpolymers have higher dielectric constants than EVA copolymers, allowing higher field strengths to be used without the fear of arcing.

Novel adhesives comprising terpolymers of ethylene/carbon monoxide/carboxylic acid are prepared as embodiments in accordance with the present invention. The carboxylic acid moiety of the terpolymer may be any of the unsaturated carboxylic acids which are polymerizable through the double-bond, such as acrylic acid, methacrylic acid, crotonic acid, and 1-butenoic acid, especially acrylic acid or methacrylic acid, most especially acrylic acid, including salts of these acids, such as metal salts, especially Na or K salts, commonly known as "ionomer" salts. The preparation of these E/CO/acid terpolymers may be done in the same manner as the E/acid copolymers as disclosed in U.S. 3,520,861 and U.S. 4,351,931. These patents disclose the use of a high pressure stirred autoclave reactor, using a free-radical initiator, to prepare uniform, random ethylene/carboxylic acid copolymers. Whereas these terpolymers can also be made by grafting techniques, by block polymerization techniques, in batch reactors, or in long tube reactors, it is preferred that stirred autoclave reactors be used whereby substantially uniform, random terpolymers are made.

Even though E/AA copolymers are generally regarded as having good adhesive properties with many substrates, as compared to polyethylene, there are some substrates where improved adhesion is desirable. Notable among these substrates where improved adhesion is desirable, are polyamides (e.g. nylons), polyolefins (e.g. LDPE, HDPE, LLDPE, PP, OPP, polyisoprene), fluoropolymers (e.g. PTFE), polyethylene terephthalate (PET), metals (e.g. steel and aluminum foil), some paper-type products (e.g. glassine, kraft paper, etc.), cured epoxy resins, ethylene/vinyl alcohol copolymers, cured novolac resins, polyurethanes, polycarbonates, chloropolymers (e.g. polychloroprene, PVC, polyvinylidene), and inorganic substrates (e.g. glass and porcelain).

Conversely, whereas E/CO copolymers exhibit a modicum of heat-activated or heat-induced adhesive properties to some substrates, it has been determined that the present E/CO/acid terpolymers exhibit greater adhesiveness in such instances, especially to such substrates as SARAN polymer and polycarbonate (where ECO has some adhesiveness) and to ethylene/vinyl alcohol copolymers, nylon, and aluminum (where E/CO exhibits little or no adhesiveness).

The adhesive properties of these E/CO/acid terpolymers may be utilized by any convenient method, such as by hot-melt application, by post-heating of the adhesive in-situ on the substrate, by application of the adhesive in a carrier, such as in a solvent or as a dispersion in an aqueous carrier or in a non-solvent. The adhesive may be used in joining substrates of similar or dissimilar materials. As mentioned hereinbefore, these terpolymers are also suitable for use as films or as other materials and have the beneficial property of being high-frequency heatable, expecially at those frequencies which are in, or near, the microwave range.

These E/CO/acid terpolymers are quite similar in optics and physical properties to EAA copolymers made by the same process. Insofar as these novel adhesive terpolymers are concerned, the ranges of the comonomer ingredients are as follows:

## Weight % of Terpolymer

| Monomer | Operable | Preferred | Most Preferred |
|---|---|---|---|
| Ethylene | 20-98 | 40-98 | 60-96 |
| Carbon Monoxide | 1-40 | 1-30 | 2-20 |
| Carboxylic Acid | 1-40 | 1-30 | 2-20 |

The melt index (M.I.), also called melt flow rate, as measured in accordance with ASTM D-1238, is preferably in the range of 0.5 to 2500, most preferably in the range of 1 to 60, even more preferably in the range of 1 to 20.

These E/CO/acid terpolymers are thermoplastic and can be thermoformed into films, sheets, tubes, or other articles. Powders of these terpolymers can be compression molded into sintered forms or the powders can be applied to the surface of a substrate where it can be heat-plastified to provide an adhesive layer or coating on the substrate or between two substrates. A film, strip, or sheet of these terpolymers can be placed between two substrates and heat-plastified to serve as an adhesive or laminate layer to hold the substrates together.

The following examples illustrate certain embodiments of the E/CO/acid terpolymers, compared with other polymers, but the invention is not limited to the specific embodiments shown.

EXAMPLE 1

The following Table I shows the time required to melt a polymer in a microwave oven (Sears Micro-classic microwave oven) at maximum power (brought 275 ml of water to boil in 2.48 minutes).

## TABLE I

| Resin* | MI*** | Melt Time (sec)** |
|---|---|---|
| E/CO | | |
|   10% CO | 1 | 37 |
|   10% CO | 10 | 35 |
|   5% AA; 10% CO | 10 | 75 |
|   5% AA; 10% CO | 3.5 | 85 |
|   5% AA; 5% CO | 3 | 90 |
|   1% CO | 1 | 90 |
| EVA (14% VA) | wax | >10 min |
| EAA (12% AA) | wax | >10 min |
| Oxidized (PE) | wax | >10 min |
| E/vinyl alcohol | - - | 42 |
| EVA/CO (20% CO) | - - | 25 |
| EVA | | |
|   28% VA | 3.5 | >10 min |
|   18% VA | 3.0 | >10 min |
| EAA | | |
|   20% AA | 300 | >10 min |
|   30% AA | 1250 | >10 min |
| HDPE (0.965 dens.) | .8 | >10 min |
| LDPE (0.918 dens.) | 6 | >10 min |
| LLDPE (0.918 dens.) | 6 | >10 min |
| Nylon®-6 resin (dried) | - - | >10 min |
| Saran® B-200 polymer | - - | >10 min |
| Chlorinated PE | - - | >10 min |

  * Samples were 5.0 cm 2" discs of 1.52 mm thickness, positioned on a non-RF sensitive polycarbonate sheet.

  ** If no melting was evident in 10 minutes, the test was stopped and reported as >10 min.

  *** MI is melt index in accordance with ASTM D-1238.

  ® Registered tradenames

As can be seen from Table I, only ethylene interpolymers containing carbon monoxide melted in the microwave oven (2450 MHz).

EXAMPLE 2

EP 0 455 265 A2

To determine the RF-sealability of carbon monoxide containing copolymers, a Callanan 1-1/2 KW high-frequency electronic generator equipped with a 0.24 cm x 30.5 cm brass sealing electrode and operating over a frequency range of 20-40 MHz (RF) was utilized in the following sealing experiment. Samples of 76 $\mu$m blown film of the copolymers shown in Table II were attempted to be sealed using the above RF sealer utilizing various dwell settings (sealing time) and power settings. The seals were examined and a seal was considered to have been made when the two sheets of material could not be separated at the seal point without tearing either piece of film. Table II also shows the improvement in minimum sealing time and resistance to arcing of CO containing copolymers in comparison to EVA copolymers.

## TABLE II

### RADIO FREQUENCY SEALABILITY

| Resin | Power Setting | Dwell Time sec. | Sealability |
|---|---|---|---|
| EVA (9.3% VA, 2 MI) | 90 | 3 | No |
| | 100 | 3 | No |
| | 100 | 4 | Arc* |
| EVA (18% VA, 2.5 MI) | 10 | 1 | No |
| | 40 | 2 | No |
| | 70 | 2 | Yes |
| | 60 | 2 | Yes |
| | 70 | 1 | No |
| | 80 | 1 | Yes |
| | 90 | 2 | Arc |
| EVA (12.0% VA, 2.5 MI) | 60 | 2 | No |
| | 70 | 2 | No |
| | 80 | 2 | No |
| | 90 | 2 | Yes |
| | 100 | 1 | Arc |
| EVA (25% VA, 2 MI) | 30 | 2 | Yes |
| | 20 | 2 | No |
| | 60 | 1 | Yes |
| | 60 | .5 | No |
| | 70 | .5 | No |
| | 80 | .5 | Arc |
| EVA (28% VA, 3.0 MI) | 40 | 2 | Yes |
| | 20 | 1 | Yes |
| | 70 | .5 | Yes |
| | 80 | .25 | Arc |
| | 80 | .5 | Arc |
| E/CO (10% CO, 1 MI) | 50 | 2 | No |
| | 60 | 2 | No |
| | 70 | 2 | Yes |
| | 100 | 1 | Yes |
| | 90 | 1 | Yes |
| | 80 | 1. | No |
| | 100 | .5 | Yes |
| | 90 | .5 | No |

7

TABLE II (continued)

RADIO FREQUENCY SEALABILITY

| Resin | Power Setting | Dwell Time sec. | Sealability |
|---|---|---|---|
| E/AA/CO | 70 | 2 | Yes |
| (5% AA, 10% CO, | 60 | 2 | Yes |
| 3.5 MI) | 50 | 2 | Yes |
| | 70 | 1 | Yes |
| | 60 | 1 | Yes |
| | 70 | .5 | Yes |
| | 60 | .5 | No |
| | 80 | .25 | No |
| | 90 | .25 | Yes |
| E/AA/CO | 70 | .5 | Yes |
| (5% AA, 10% CO, | 80 | .5 | Yes |
| 10 MI) | 80 | .25 | No |
| | 90 | .25 | Yes |

*Arc results in a hole burned through the film.

Within the purview of the present invention, useful articles are prepared which utilize the high-frequency electromagnetic radiation heatability and sealability of the above described CO containing olefin polymers. Layers or plies of these polymers are used as a means for sealing or bonding materials which are not, themselves, efficiently suitable for high-frequency electromagnetic radiation sealing or bonding. Thus multiple articles sealable by high-frequency electromagnetic radiation can be prepared from layers of paper, cloth, fabric, metal, ceramic, glass, wood, resin and other polymers alternating with layers of the HF-sealable E/CO polymer. For example, a ring of the HF-sealable E/CO polymer can be applied inside a container lid and then the lid tightly sealed to the container by exposure to a microwave radiation source.

Various substrates, including particles, films, sheets, blocks, rods, and spheres can be coated, at least in the area desired to be bonded, with these polymers and then sealed or bonded together using high-frequency electromagnetic radiation, especially those frequencies in the microwave range. Alternately, these polymers, in the form of powders or particles, may be extruded into useful shapes, or as coatings onto other materials (e.g. wire and cable coatings), using high-frequency electromagnetic radiation as the heating means.

Example 3

The examples in Table III are produced by compression molding at pressures and temperatures conducive to heat fusion. The resin samples to be tested for adhesion are first compression molded into 0.51 mm places and then laminated to the substrate (a film or plaque) to test for adhesion to the substrate. The adhesive of ethylene/carbon monoxide/acrylic acid terpolymers E/CO/AA, is shown in comparision to low density polyethylene, (LDPE); ethylene/acrylic acid copolymer (E/AA); ethylene/vinylacetate copolymer, (E/VA); ethylene/carbon monoxide copolymer, (E/CO); and ethylene/ carbon monoxide/vinyl acetate terpolymer, (E/CO/VA). The good adhesiveness obtainable with E/CO/AA terpolymers to the various substrates is evident, especially with nylon (a polyamide) and with polycarbonate which generally do not form strong bonds with most heat-plastified adhesives.

8

EP 0 455 265 A2

## TABLE III

### COMPRESSION MOLDED ADHESION VALUES (kg/cm)

| ADHESIVE | PERCENT COMONOMER WITH ETHYLENE | | | |
|---|---|---|---|---|
|  | AA | CO | VA | MI |
| LDPE | – | – | – | – |
| E/AA Copolymer | 6.2 | – | – | 3.02 |
| E/AA Copolymer | 9.8 | – | – | 9.6 |
| E/AA Copolymer | 9.0 | – | – | 3.6 |
| E/VA Copolymer | – | – | 28.5 | 5.8 |
| E/VA Copolymer | – | – | 6.5 | 1.11 |
| E/CO/AA Terpolymer | 5.0 | 5.0 | – | 56.1 |
| E/CO/AA Terpolymer | 5.0 | 10.0 | – | 4.3 |
| E/CO/AA Terpolymer | 5.0 | 10.0 | – | 18.7 |
| E/CO Copolymer | 0 | 10.0 | – | 7 |
| E/CO Copolymer | 0 | 10.0 | – | 8.2 |
| E/CO/AA Terpolymer | 10.0 | 5.0 | – | 4.1 |
| E/CO/VA Terpolymer | – | 10.0 | 10.0 | 35.2 |

TABLE III Continued

| ADHESIVE | SUBSTRATE | | | | | |
|---|---|---|---|---|---|---|
| | A[1] | B[2] | Nylon[3] | Aluminum[4] | EVAL[5] | Polycarbonate[6] |
| LDPE | 0.002 | 0.002 | 0.002 | 0.009 | 0.002 | 0.002 |
| E/AA Copolymer | 0.002 | 0.004 | 0.43 | 3.23 | 0.089 | 0.009 |
| E/AA Copolymer | 0.002 | 0.002 | 0.68 | 5.22 | 0.125 | 0.014 |
| E/AA Copolymer | 0.002 | 0.002 | 0.75 | 4.90 | 0.089 | 0.014 |
| E/VA Copolymer | 1.34 | 1.13 | 0.96 | 0.38 | 0.55 | 0.014 |
| E/VA Copolymer | 0.007 | 0.020 | 1.15 | 1.59 | 1.22 | 0.009 |
| E/CO/AA Terpolymer | >1.87 | >0.43 | 0.33 | 3.22 | 0.55 | 1.34 |
| E/CO/AA Terpolymer | 2.11 | >0.34 | 1.77 | 2.86 | 1.34 | >1.86 |
| E/CO/AA Terpolymer | 1.61 | >0.75 | >4.15 | 4.02 | 1.41 | >1.86 |
| E/CO Copolymer | 1.72 | >0.43 | 0.089 | 0.07 | 0.04 | >1.39 |
| E/CO Copolymer | 1.84 | >0.73 | 0.017 | 0.14 | 0.09 | >1.47 |
| E/CO/AA Terpolymer | 1.27 | 0.27 | >4.32 | 4.45 | 1.23 | – |
| E/CO/VA Terpolymer | 1.47 | 1.09 | 1.57 | 0.35 | 0.24 | – |

>. indicates cohesive failure strength of film substrate

A[1] 6-mil SARAN PVDC film 153 μm (6 mil)

A[2] 2-mil SARAN PVDC film 51 μm (2 mil)

[3] Nylon-6 film

[4] Aluminum

[5] ethylene/vinyl alcohol copolymer, molded 510 μm (20-mil) plaque

[6] 51 μm (2-mil) polycarbonate cast film

Example 4

To compare an ethylene/carbon monoxide copolym (10% CO by weight, 18.7 M.I.) with an ethylene/carbon monoxide/acrylic acid terpolymer (10% CO and 5% AA by weight, 12.8 M.I.), a 51 μm (2-mil) thick

coating of each is extrusion-coated onto various substrates and adhesion (kg/cm) is measured by the T-Peel Test of ASTM D-1876. In Table IV below, Sample A is the E/CO copolymer extrusion-coated at 300°C and sample B is the E/CO/AA terpolymer extrusion-coated at 290°C. The results illustrate the superior adhesiveness of E/CO/AA terpolymers as compared to E/CO copolymers.

### TABLE IV

### ADHESIVE STRENGTH (kg/cm)

| SAMPLE | PDVC | PET | POLYAMIDE | OPP | ALUMINUM | LDPE | LLDPE |
|--------|------|-------|-----------|--------|----------|-------|-------|
| A | >5* | 0.089 | 0.057 | <0.009 | 0.025 | 0.054 | 0.012 |
| B | >5* | 0.286 | 0.436 | 0.009 | 0.447 | 0.089 | 0.089 |

*Film failure, not adhesive failure. PDVC - polyvinylidene chloride; PET - polyethylene terephthalate; OPP - oriented polypropylene; LDPE - low density polyethylene; LLDPE - linear low density polyethylene.

The packaging industry utilizes a number of barrier resins, such as in Table V below, and the E/CO/acid terpolymers are found to make good adhesives for making laminates which contain one or more barrier layers.

### TABLE V

### Oxygen Barrier Resistance

| Nominal Value | Polymer |
|---------------|---------|
| 0.03-0.30 | ethylene/vinyl alcohol copolymers (EVAL) |
| 0.05-0.20 | polymers or copolymers based in vinyl chloride and/or vinylidene chloride monomers; SARAN |
| 2 | polyvinyl chloride (PVC) |
| 80 | plasticized PVC |
| 4 | polyethylene terephthalate (PET) |
| 10 | polyamide (nylon) |
| 125 | high density polyethylene (HDPE) |

Also E/CO/acid terpolymers are useful as heat-plastified adhesives between layers of similar plastics or resins, layers of dissimilar plastics or resins, and/or between layers of plastics or resins and completely different substrates, such as paper, cloth, metal, glass, vitreous material, wood, leather.

## Claims

1. A method of heating an olefinic polymer, characterised in that the heating is carried out using radiofrequency radiation having a frequency of more than 1MHz, and in that the polymer is an olefin-containing polymer, containing from 0.1 to 50 weight percent of units derived from carbon monoxide.

2. A method as claimed in claim 1, wherein the said heating is carried out to heat seal the polymer.

3. The use of an olefinic polymer in an application in which heatability of the polymer is required by radiofrequency radiation having a frequency of more than 1MHz,, characterised in that the olefinic polymer is an olefin-containing polymer, containing from 0.1 to 50 weight percent of units derived from carbon monoxide.

4. The use of claim 3, wherein the application is one in which sealability by radiofrequency radiation is required.

5. The use of an olefinic polymer, containing from 0.1 to 50 weight percent of units derived from carbon monoxide, in the sealing or bonding by radiofrequency radiation having a frequency of more than 1MHz, of a material which is not itself efficiently suitable for sealing or bonding by such radiation.

6. The method or use as claimed in any one of the preceding Claims, wherein the carbon monoxide comprises from 1 to 40 percent of the polymer weight.

7. The method or use of Claim 6, wherein the carbon monoxide comprises from 5 to 30 percent of the polymer weight.

8. The method or use of any one of the preceding Claims, wherein the olefinic polymer comprises copolymerized ethylene, carbon monoxide, and at least one other comonomer which is an olefinically unsaturated $C_3$-$C_8$ organic acid or an alkyl ester or metal salt of such an acid.

9. The method or use of Claim 8, wherein the olefinic polymer consists essentially of interpolymerized ethylene, acrylic or methacrylic acid, and carbon monoxide.

10. The method or use of Claim 9, wherein the olefinic polymer consists of 20 to 98 weight percent ethylene, 1 to 40 weight percent carbon monoxide, and 1 to 40 weight percent of at least one of acrylic acid and methacrylic acid.

11. The method or use of any one of the preceding Claims, wherein the said polymer is in the form of a microwave-sealable multi-ply article containing
(a) at least one ply of the said olefinic polymer, and
(b) at least one ply of a material which is ill-suited as a microwave sealable material.

12. The method or use of Claim 11, wherein the said material ill-suited to microwave sealing is polyvinyl chloride, polyvinylidene chloride, polyethylene terephthalate, polyamide, polypropylene, oriented polypropylene, ethylene/vinyl copolymer, polycarbonate, low density polyethylene, linear low density polyethylene, or aluminium.

13. The method or use as claimed in any one of the preceding claims, wherein the radiofrequency radiation has a frequency of at least 20 MHz.

14. The method or use as claimed in claim 13, wherein the radiofrequency radiation has a frequency of from 20 to 40 MHz.

15. An article in the form of two substrates unsuited or ill suited to being heat sealed by means of radiofrequency or microwave radiation having a frequency of more than 1MHz, wherein there is provided between the two substrates a film, strip or sheet of an olefinic polymer as an adhesive or laminate layer to hold the substrates together, characterised in that the olefinic polymer comprises units derived from
(a) an olefin and
(b) carbon monoxide
and in that the olefinic polymer contains from 0.1 to 50 weight percent of units derived from carbon monoxide.

16. An article as claimed in claim 15, wherein the olefinic polymer includes units derived from
    (a) an olefin
    (b) carbon monoxide and
    (c) an olefinically unsaturated organic acid having from 3 to 8 carbon atoms,
    and wherein the units (a) (b) and (c) are present in the olefinic polymer in amounts of from 20 to 98 percent, from 1 to 40 percent, and from 1 to 40 percent by weight respectively.

17. An article as claimed in claim 15 or claim 16, wherein one of the substrates is a container, and the other substrate is a lid for the container.